# EUROPÄISCHE PATENTSCHRIFT

(11) **EP 0 565 846 B1**
(45) Veröffentlichungstag und Bekanntmachung des Hinweises auf die Patenterteilung: **24.04.1996**
(21) Anmeldenummer: 93103438.3
(22) Anmeldetag: 04.03.1993
(51) Int. Cl.: B23K 33/00, B23K 26/00

(54) **Verfahren und Vorrichtung zum Schweissen von Blechen zu Platinen mittels Laser**
Process and apparatus for welding sheet metal
Procédé et dispositif pour le soudage de tôles métalliques

(30) Priorität: 12.04.1992 CH 1173/92; 13.04.1992 CH 1211/92; 25.02.1993 CH 573/93
(43) Veröffentlichungstag der Anmeldung: 20.10.1993
(73) Patentinhaber: ELPATRONIC AG, CH-6303 Zug (CH)
(72) Erfinder: Meier, Markus, CH-8214 Gächlinge (CH); Urech, Werner, CH-8434 Kaiserstuhl (CH); Wueger, Karl, CH-8610 Uster (CH)

(56) Entgegenhaltungen:
- WO-A-84/03059
- DE-A- 3 909 620

## Beschreibung

Die Erfindung betrifft ein Verfahren gemäss Oberbegriff des Anspruchs 1. Ferner betrifft die Erfindung eine Vorrichtung gemäss Oberbegriff des Anspruchs 9.

Es ist bekannt, Bleche miteinander durch Laserverschweissen stumpf zu verbinden. Die miteinander verbundenen Bleche werden als Platine bezeichnet. Beim Schweissen mittels Laser im Stumpfstoss stellt sich das Problem, dass die mit ihren Stirnflächen aneinander liegenden Bleche sehr exakt positioniert werden müssen und nur einen engen Spalt zwischen sich aufweisen dürfen. Für eine gute Qualität der Schweissnaht darf der Spalt in der Regel nur eine Breite von 0,05 bis 0,08 mm aufweisen. Das heisst, dass jedes der beiden Bleche nur eine Abweichung von 0,04 mm von einer Geraden aufweisen darf. Bei langen Schweissnähten, wie sie bei Platinen vorliegen, ist es nun ausserordentlich aufwendig, eine solch geringe Spaltbreite entlang der gesamten positionierten Stirnflächen der zu verschweissenden Bleche zu erzielen. Es sind zwar Feinschnittscheren erhältlich, welche einen z.B. 2,5 m langen Schnitt von der benötigten Genauigkeit ausführen können, doch sind solche Scheren ausserordentlich kostspielig. Andere bekannte Verfahren der Kantenvorbereitung, wie Fräsen, Schleifen oder Laserschneiden beinhalten erheblichen Mehraufwand an Produktionszeit und Kosten. Aus DE-A-39 09 620 ist es bekannt, die beim Schneiden entstandenen Schneidgrate zu verformen, damit diese den Spalt bedecken. Dabei wird nur das obere Spaltende etwas mehr geschlossen, ohne das der Spalt über seine ganze Höhe gefüllt wird. Damit wird eine verbleibende Spaltbreite von ca. 1/10 der Blechdicke erzielt, was z.B. bei einer Blechdicke von 3 mm einer Spaltbreite von 0,3 mm entspricht und somit klar über dem anzustrebenden Wert liegt. Die Lehre gemäss WO-A-84/3059 betrifft nicht die Kantenvorbereitung, sondern ein spezielles Schweissverfahren, bei dem die Bleche in oder nach der Schweissstelle aneinandergedrückt werden.

Der Erfindung liegt deshalb die Aufgabe zugrunde, ein Verfahren zur Kantenvorbereitung für das Schweissverfahren mittels Laser zu schaffen, bei welchem das derart exakte Schneiden und Positionieren der Bleche nicht notwendig ist, bzw. die Anforderungen stark reduziert sind, und welches daher wesentlich kostengünstiger und rascher ausführbar ist.

Dies wird bei einem Verfahren der eingangs genannten Art durch die kennzeichnenden Merkmale des Anspruchs 1 erzielt.

Durch das erfindungsgemässe Verfahren ist es möglich, die Bleche mit wesentlich geringerer Präzision zuzuschneiden, wobei eine Genauigkeit von ca. 0,15 mm pro Blech genügend ist. Es ergibt sich somit, ein maximaler Spalt von etwa 0,3 mm, welcher durch die erfindungsgemässe Verformung des einen oder beider Bleche im wesentlichen aufgehoben wird, d.h. durch die Verformung wird ein Spalt erzielt, welcher die Höchstbreite von 0,08 mm nicht übersteigt.

Der Erfindung liegt ferner die Aufgabe zugrunde, eine Vorrichtung zur Durchführung des Verfahrens zu schaffen. Dies wird durch eine Vorrichtung mit den Merkmalen des Anspruchs 9 erreicht.

Nachfolgend werden Ausführungsbeispiele der Erfindung anhand der Zeichnungen näher erläutert. Dabei zeigt
Figur 1 einen Vertikalschnitt durch zwei zu verschweissende Bleche ungleicher Dicke;
Figur 2 einen Vertikalschnitt durch zwei zu verschweissende Bleche gleicher Dicke;
Figur 3 eine weitere Ausführungsform mit mehreren Quetschrollen;
Figur 4 eine weitere Ausführungsform der Erfindung;
Figur 5 ebenfalls eine weitere Ausführungsform der Erfindung;
Figur 6 eine weitere Ausführungsform bei der Verschweissung von Blechen unterschiedlicher Dicke;
Figur 7 eine weitere Ausführungsform der Erfindung;
Figur 8 ebenfalls eine weitere Ausführungsform der Erfindung;
Figur 9 eine Ausführungsform mit einer abgeschrägten Quetschrolle;
Figur 10 eine Ausführungsform mit einer Anschlagleiste;
Figur 11 ebenfalls eine Ausführungsform mit Anschlagleiste, und
Figur 12 eine Ausführungsform, bei welcher die Quetschrollen jeweils den Anschlag bilden.

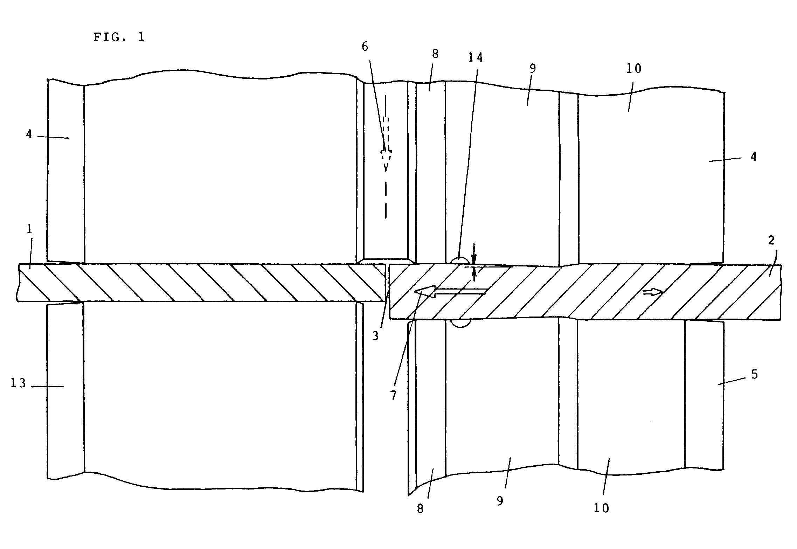

Figur 1 zeigt einen Vertikalschnitt durch zwei zu verschweissende Bleche 1 bzw. 2. Die beiden Bleche 1, 2, von denen eines dicker ist als das andere, liegen mit ihren Stirnflächen aneinander an und werden in dieser Lage stumpf miteinander verschweisst. Die Verschweissung erfolgt in an sich bekannter Weise durch einen Laserstrahl 6, welcher z.B. in der Schweisszone einen fokussierten Querschnitt von 0,2 mm Durchmesser aufweist. Damit die Schweissung die erforderliche Qualität aufweist und frei von Fehlern und Ungänzen bleibt, darf der Spalt 3 zwischen den aneinander angrenzenden Blechen 1, 2 in der Schweisszone maximal eine Breite von 0,08 mm aufweisen. Bei grösserer Breite des Spaltes kommt es zu einem Schweissnahteinfall oder zu einem Durchbrechen des Strahles. Wird das Verfahren gemäss der Erfindung angewendet, so kann nun aber der Spalt zwischen den Blechen zunächst wesentlich grösser sein, z.B. 0,3 mm. Das heisst, dass die Bleche wesentlich weniger genau zugeschnitten werden müssen. Vor der Schweisszone oder in der Schweisszone wird nun erfindungsgemäss eines der Bleche oder werden beide der Bleche plastisch so verformt, dass sich die Breite des Spaltes verringert, so dass die maximal zulässige Spaltbreite unterschritten wird. In Figur 1 ist gezeigt, dass das dickere der beiden Bleche mittels zweier Quetschrollen 4 bzw. 5 in seiner Dicke verringert wird. Dadurch ergibt sich ein Fliessen des verformten Materials hauptsächlich in Richtung des Pfeiles 7, wodurch die Spaltbreite verringert wird. Die beiden Quetschrollen weisen dabei jeweils eine Zone 8 auf, in welcher die Quetschrolle auf dem Blech aufliegt, eine Zone 9, welche in das Blech eindringt, um die Materialverschiebung zu bewirken und eine weitere Zone 10, welche auf dem Blech aufliegt. Die Zone 9 ist dabei in diesem Beispiel so ausgeführt, dass sich eine mit zunehmendem Abstand vom Spalt grössere Eindringtiefe der Rolle in das Blech ergibt. Dadurch soll erreicht werden, dass der Materialfluss hauptsächlich in Richtung des Pfeiles 7 erfolgt und nicht in Gegenrichtung, was unerwünscht ist. Bei der beispielhaft dargestellten Anordnung zeigt sich, dass bei einer Blechdicke des Bleches 2 von 3 Millimetern und einer Breite der Zone 9 von 6 Millimetern ein Eintauchen der Quetschrolle von 0,1 mm eine Materialverschiebung im Bereich des Spaltes von ca. 0,2 mm ergibt. Das Blech wird dabei mit einer Kraft von 1 bis 2 Tonnen plastisch verformt. Beim dünneren Blech 1 ist nur eine Führungszone der Rolle 4 und eine Führungsrolle 13 vorgesehen. Es könnte aber auch nur das Blech 1 zur Verringerung des Spaltes plastisch verformt werden, oder es könnten beide Bleche plastisch verformt werden.

An jenen Stellen, an denen die Bleche bereits in Berührung miteinander stehen, ist eine plastische Verformung des einen oder beider Bleche an sich unnötig. Wenn eine solche dennoch erfolgt, so führt sie an sich zu unerwünschten Kräften auf die Bleche, die diese voneinander weg schieben. Es kann daher z.B. in der Zone 9 der Quetschrollen jeweils eine umlaufende Nut 14 vorgesehen sein, welche in diesem Fall ein Ausweichen des fliessenden Materials in diese Ausnehmung ermöglicht, um die unerwünschten Schubkräfte zu verringern. Vorzugsweise kann aber auch die auf die Quetschrollen einwirkende Verformungskraft gesteuert werden, indem die Breite des Spaltes vor der Verformungszone optisch oder mechanisch erfasst wird und entsprechend die auf die Quetschrollen einwirkende Kraft erhöht oder vermindert wird, so dass an denjenigen Stellen, wo die Breite des Spaltes bereits sehr gering ist oder die Bleche bereits miteinander in Kontakt stehen, nur eine geringe Kraft auf die Quetschrollen ausgeübt wird. Anstelle der Aenderung der Kraft auf die Rollen kann auch deren Achsenlage geändert werden, was ein tieferes Eindringen oder weniger tiefes Eindringen in das Blech erlaubt.

Nach der Verformung des Materials zur Verringerung der Spaltbreite verläuft der Spalt in der Regel nicht mehr gerade. Deshalb wird in einer Weiterbildung der Erfindung der Laserstrahl dem Spaltverlauf nachgeführt. Dazu wird vorzugsweise optisch oder auf andere Weise der Verlauf des Spalts in bezug auf ein festes Koordinatensystem gemessen, und der Laserstrahl wird entsprechend den Signalen der Messeinrichtung vorzugsweise durch Verstellen eines oder mehrerer Spiegel so aus einer Nullposition im o.a. Koordinatensystem abgelenkt, dass er dem gemessenen Spaltverlauf folgt. Damit wird erreicht, dass die Schweissnaht mittig über dem verbleibenden Fügespalt liegt. Wird, insbesondere beim Verschweissen von Blechen unterschiedlicher Dicke, ein Strahlversatz in Richtung auf das dickere Blech gewünscht, so kann dies durch Korrektur der Ausgabesignale in der Messwertverarbeitung erfolgen.

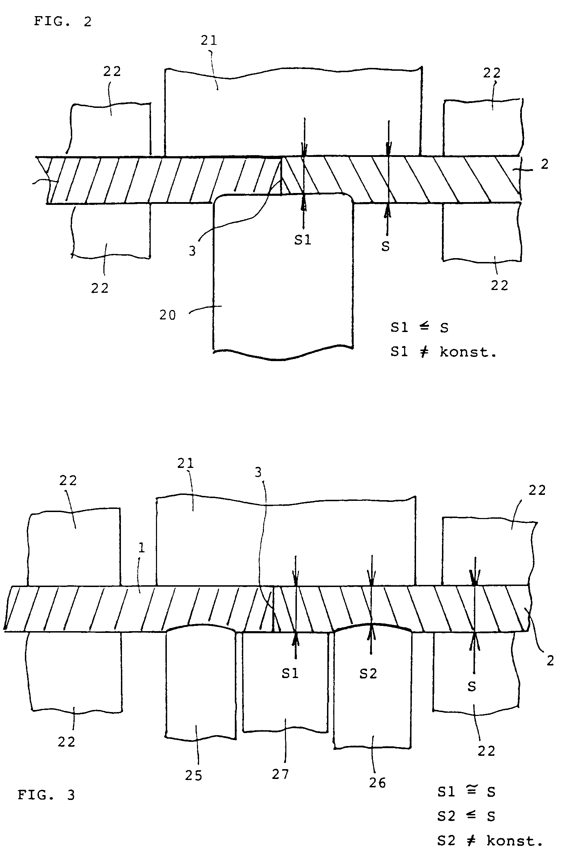

Figur 2 zeigt zwei Bleche 1 bzw. 2, welche gleiche Dicke aufweisen. Unterhalb der Bleche ist eine schmälere Quetschrolle 20 vorgesehen, welche in das Material beider Bleche eindringt. Oberhalb der Bleche ist eine breitere Rolle oder Schiene 21 vorgesehen, welche nicht in die Bleche eindringt. Ferner sind seitliche Blechführungen 22 vorgesehen.

Figur 3 zeigt eine weitere Ausführungsform mit zwei Blechen 1 bzw. 2 von gleicher Dicke. Dabei ist oberhalb der Bleche wiederum eine Rolle oder Schiene 21 vorgesehen. Unterhalb der Bleche 1, 2 sind zwei seitliche Rollen 25 bzw. 26 vorgesehen, welche als Quetschrollen in das Material eindringen und dort jeweils die Dicke des Bleches verringern. Mittig zwischen diesen Quetschrollen ist eine Rolle oder Schiene 27 zur Stützung der Bleche vorgesehen.

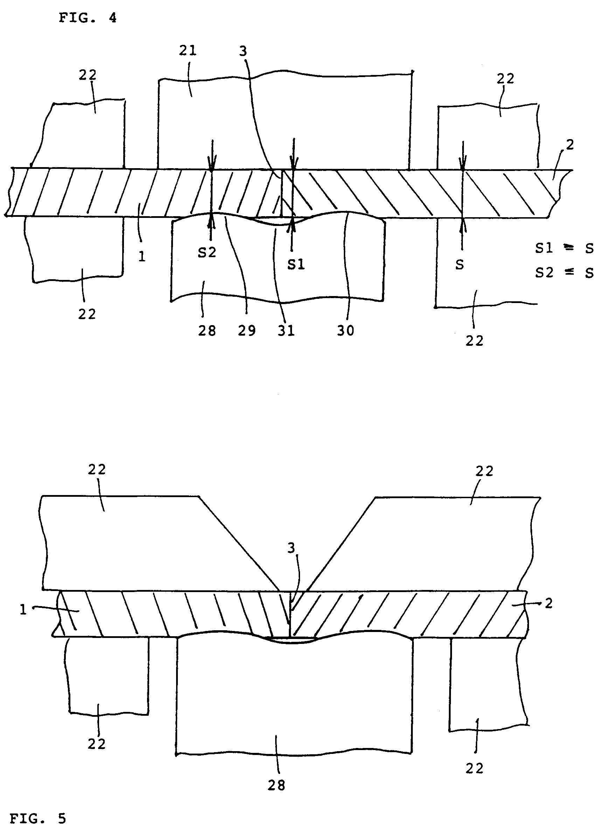

Figur 4 zeigt eine weitere Ausführungsform, wobei eine untere Rolle 28 vorgesehen ist, welche beidseits des Spaltes 3 jeweils mit einer Eindringzone 29 bzw. 30 versehen ist, welche jeweils das Material plastisch verformt. In der Mitte ist die Rolle mit einer Einbuchtung 31 versehen.

Figur 5 zeigt eine ähnliche Ausführungsform zu Figur 4, wobei die obere Rolle oder Schiene durch eine andere Ausgestaltung der Führungen 22 ersetzt ist.

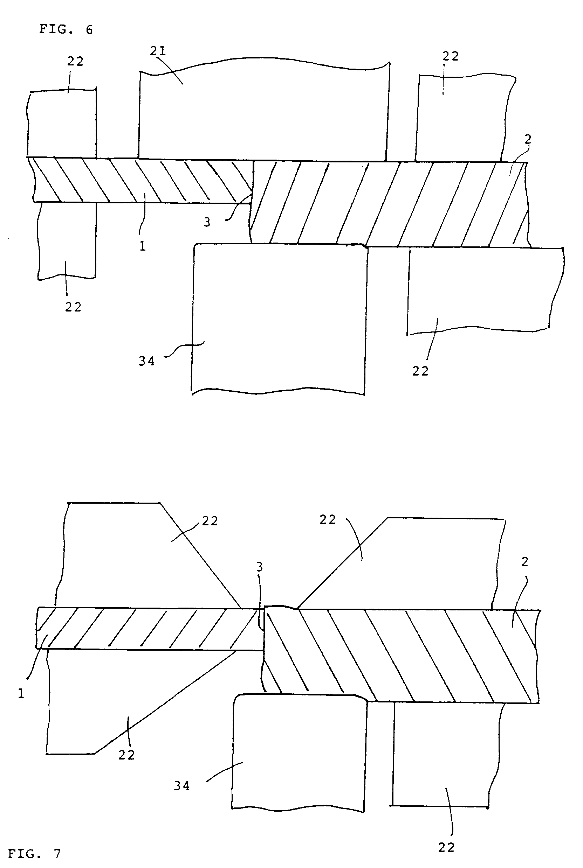

Figur 6 zeigt eine weitere Ausführungsform, bei welcher zwei Bleche verschiedenener Dicke vorhanden sind. Dabei ist unterhalb der Bleche eine Quetschrolle 34 vorgesehen, welche in das Material des dickeren Bleches 2 eindringt. Oberhalb der Bleche ist eine Rolle oder Schiene 21 vorgesehen, welche als Führung dient.

Figur 7 zeigt eine weitere Ausgestaltung der Ausführung gemäss Figur 6. Dabei ist die obere Rolle oder Schiene durch eine entsprechende Ausgestaltung der Führungen 22 ersetzt.

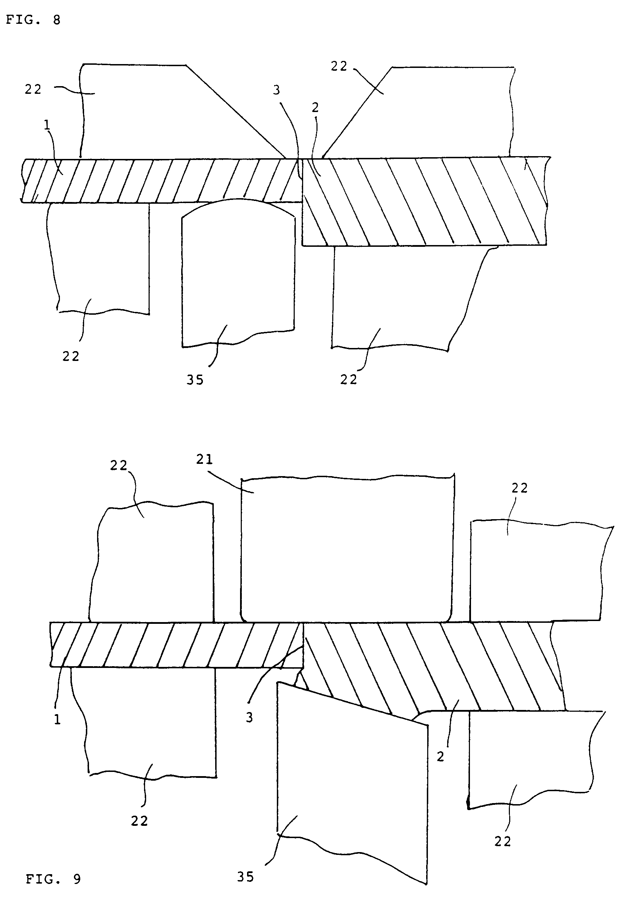

Figur 8 zeigt eine ähnliche Ausführung zu Figur 7, wobei aber hier das dünnere Blech 1 verformt wird.

Figur 9 zeigt eine Ausführung mit einer abgeschrägten Rolle 35.

Figur 10 zeigt eine andere Ausführungsart der Erfindung. Dabei werden die Bleche 1, 2 zunächst jeweils separat mittels Quetschrollen 40, 41 bzw. 42, 43 gegen einen feststehenden Anschlag 45 hin verformt. An diesem Anschlag wird somit für jedes Blech durch plastische Verformung desselben eine sehr präzis gerade Kante geschaffen. Dieser Vorgang erfolgt vor der Schweisszone, und die Bleche werden vor dem Schweissen in einem weiteren Schritt mit den beiden geraden Kanten zur Anlage aneinander gebracht, z.B. durch Entfernung des Anschlages 45 und seitliche Bewegung der Bleche aufeinander zu.

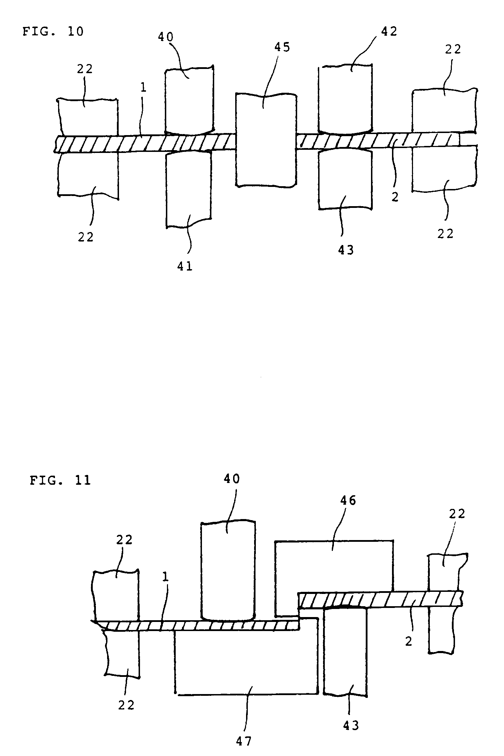

Figur 11 zeigt eine weitere Ausführungsform der Erfindung mit zwei festen Anschlägen zur 46, 47 und jeweils nur einer Quetschrolle pro Blech.

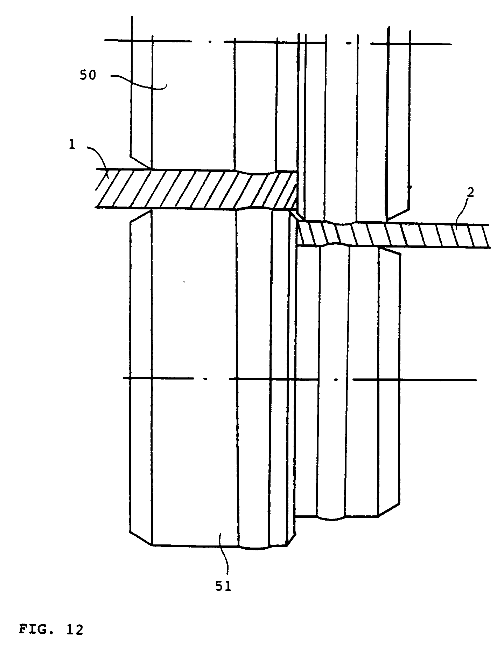

Figur 12 zeigt eine Ausführungsform mit zwei Quetschrollen 50, 51, welche jeweils einen Absatz aufweisen, der als Anschlag für jeweils eines der Bleche 1 bzw. 2 wirkt. Bei dieser Variante liegen die Bleche, abgesehen vom geringen Höhenversatz beim Quetschen, in der richtigen Lage zueinander, d.h. die Bleche 1, 2 müssen nicht mehr seitlich verschoben werden.

Die eingespannten Bleche können von einer Fördereinrichtung durch die feststehende Verformungseinrichtung und an den Laserstrahl geführt werden. Die ein-gespannten Bleche können aber auch feststehen und die Verformungseinrichtung kann entlang der Fügelinie verfahrbar sein. Vorzugsweise ist dann auch eine verfahrbare Fokussieroptik für den Laserstrahl vorgesehen.

## Patentansprüche

1. Verfahren zur Kantenvorbereitung beim Schweissen von Blechen (1,2) im Stumpfstoss zu Platinen mittels Laser, bei dem vor der Schweisszone mindestens eines der Bleche plastisch verformt wird, dadurch gekennzeichnet, dass die Breite des Spaltes (3) zwischen den Blechen (1,2) durch Ausquetschen von Material jeweils in Richtung des anderen Bleches verringert wird oder der Spalt mindestens teilweise verschlossen wird.

2. Verfahren nach Anspruch 1, dadurch gekennzeichnet, dass die Blechdicke seitlich des Spaltes ungleichmässig verringert wird.

3. Verfahren nach einem der Ansprüche 1 oder 2, dadurch gekennzeichnet, dass seitlich des Spaltes (3) eine Zone (14) vorgesehen ist, in welcher bei der Verformung eine Verdickung des Bleches ermöglicht wird, um ein Auseinanderdrücken der Bleche (1,2) durch den Materialfluss zu verhindern.

4. Verfahren nach einem der Ansprüche 1 bis 3, dadurch gekennzeichnet, dass die Verformung in Abhängigkeit von der Spaltbreite vor der Verformungszone gesteuert wird.

5. Verfahren nach einem der Ansprüche 1 bis 4, dadurch gekennzeichnet, dass die Verformung mittels mindestens einer oberhalb oder unterhalb des Bleches angeordneten Quetschrolle (4,5;20;25,26;28;34;35;40,41,42, 43;50,51) erfolgt.

6. Verfahren nach Anspruch 5, dadurch gekennzeichnet, dass die Bleche (1,2) in zueinander versetzter Höhenlage jeweils gegen einen Anschlag (45;46,47) oder gegen einen einen Anschlag bildenden Absatz der Quetschrolle (50,51) verformt werden.

7. Verfahren nach einem der Ansprüche 1 bis 6, dadurch gekennzeichnet, dass der Laserstrahl (6) der sich in Abhängigkeit von der Verformung ergebenden Lage des Spaltes nachgeführt wird.

8. Verfahren nach einem der Ansprüche 1 bis 7, dadurch gekennzeichnet, dass die Verformung im unmittelbar an die Stirnfläche des Bleches angrenzenden Blechbereich erfolgt.

9. Kantenvorbereitungsvorrichtung in einer Vorrichtung zum Schweissen von Blechen (1,2) im Stumpfstoss zu Platinen mittels Laser, wobei die Kantenvorbereitungseinrichtung eine Halteeinrichtung (22), welche die Bleche mit ihren Stirnseiten aneinanderliegend fixiert, und eine Verformungseinrichtung umfasst, welche vor der Schweisszone mindestens eines der Bleche plastisch verformt, dadurch gekennzeichnet, dass durch die Verformungseinrichtung (4,5;20,21;25-27;28-31;21,34;35; 40-43;45;40,43,46,47;50,51) die Breite des Spaltes (3) zwischen den Blechen (1,2) durch Ausquetschen von Material jeweils in Richtung des anderen Bleches verringert wird oder der Spalt mindestens teilweise verschlossen wird.

10. Vorrichtung nach Anspruch 9, dadurch gekennzeichnet, dass die Verformungseinrichtung mindestens eine Quetschrolle (4,5;20;25,26;28;34;35;40-43;50,51) aufweist, durch welche das Blech in seiner Dicke verringert wird.

11. Vorrichtung nach Anspruch 10, dadurch gekennzeichnet, dass die Quetschrolle (28) einen Abschnitt (29,30) mit konischer Aussenfläche aufweist, um die Blechdicke ungleichmässig zu verringern.

12. Vorrichtung nach Anspruch 10 oder 11, dadurch gekennzeichnet, dass die Quetschrolle eine umlaufende Ausnehmung (14) aufweist, um an dieser Stelle eine Verdickung des Bleches zu erlauben.

13. Vorrichtung nach einem der Ansprüche 9 bis 12, dadurch gekennzeichnet, dass eine Erfassungseinrichtung zur Erfassung der Spaltbreite vor der Verformungszone und eine Steueranordnung vorgesehen sind, welche Steueranordnung in Abhängigkeit von der erfassten Spaltbreite die Verformungseinrichtung steuert.

14. Vorrichtung nach Anspruch 10 und 13, dadurch gekennzeichnet, dass die Steueranordnung die Krafteinwirkung der Verformungseinrichtung auf das Blech steuert.

15. Vorrichtung nach Anspruch 10 und 13, dadurch gekennzeichnet, dass die Steueranordnung die Lage der Quetschrollenachse zur Blechoberfläche steuert.

16. Vorrichtung nach einem der Ansprüche 9 bis 15, gekennzeichnet durch eine optische oder mechanische Erkennungseinrichtung zur Erkennung des Verlaufs des Spaltes nach der Verformung, und eine auf die Erkennungseinrichtung ansprechende Nachführungsanordnung zur Nachführung des Laserstrahls entsprechend dem Spaltverlauf.

17. Vorrichtung nach einem der Ansprüche 9 bis 16, dadurch gekennzeichnet, dass eine untere und eine obere Quetschrolle (50,51) vorgesehen sind, welche jeweils einen Anschlag für eines der Bleche aufweisen.

18. Vorrichtung nach einem der Ansprüche 9 bis 17, dadurch gekennzeichnet, dass die Verformungseinrichtung einen kugelförmigen Quetschkörper zur Verformung mindestens eines der Bleche aufweist.

## Claims

1. Process for edge preparation for the laser butt welding of metal sheets (1, 2) to form compound panels, in which at least one of the sheets is plastically deformed before reaching the welding zone, characterized in that the width of the gap (3) between the sheets (1, 2) is reduced, or the gap is at least partly closed, by the squeezing-out of material towards the other sheet.

2. Process according to Claim 1, characterized in that the thickness of the sheet alongside the gap is reduced non-uniformly.

3. Process according to Claim 1 or 2, characterized in that alongside the gap (3) a zone (14) is provided in which a bead can be formed on the sheet during the deforming process, to prevent the sheets (1, 2) from being pushed apart by the material flow.

4. Process according to any one of Claims 1 to 3, characterized in that the deformation is controlled as a function of the width of the gap before the deformation zone.

5. Process according to any one of Claims 1 to 4, characterized in that deformation is by means of at least one pinch roller (4, 5; 20; 25, 26; 28; 34; 35; 40, 41, 42, 43; 50, 51) arranged above or below the sheet.

6. Process according to Claim 5, characterized in that the sheets (1, 2) with their vertical positions offset with respect to one another are each deformed against a stop (45; 46, 47) or against a shoulder of the pinch roller (50, 51) forming a stop.

7. Process according to any one of Claims 1 to 6, characterized in that the laser beam (6) is made to track the position of the gap resulting from the deformation.

8. Process according to any one of Claims 1 to 7, characterized in that the deformation occurs in the region of the sheet immediately adjacent to the edge face of the sheet.

9. Edge preparation apparatus in an apparatus for laser butt welding metal sheets (1, 2) to form compound panels, in which the edge preparation unit comprises a holding device (22) which fixes the sheets with their edge faces juxtaposed, and a deformation device which plastically deforms at least one of the sheets before the welding zone, characterized in that the width of the gap (3) between the sheets (1, 2) is reduced, or the gap is at least partly closed, by a squeezing-out of material towards the other sheet by the deformation device (4, 5; 20, 21; 25-27; 28-31; 21, 34; 35; 40-43; 45; 40, 43, 46, 47; 50, 51).

10. Apparatus according to Claim 9, characterized in that the deformation device has at least one pinch roller (4, 5; 20; 25, 26; 28; 34; 35; 40-43; 50, 51) which reduces the thickness of the sheet.

11. Apparatus according to Claim 10, characterized in that the pinch roller (28) has a portion (29, 30) with a conical outer surface to reduce the thickness of the sheet non-uniformly.

12. Apparatus according to Claim 10 or 11, characterized in that the pinch roller has a circumferential recess (14) enabling a bead to be formed on the sheet at this point.

13. Apparatus according to any one of Claims 9 to 12, characterized in that a detector device for detecting the width of gap before the deformation zone and a control arrangement are provided, the said control arrangement controlling the deformation device as a function of the width of gap detected.

14. Apparatus according to Claims 10 and 13, characterized in that the control arrangement controls the application of force to the sheet by the deformation device.

15. Apparatus according to Claims 10 and 13, characterized in that the control arrangement controls the position of the axis of the pinch rollers with respect to the surface of the sheet.

16. Apparatus according to any one of Claims 9 to 15, characterized by an optical recognition or mechanical detection device for detecting the line of the gap after deformation, and a tracking arrangement responding to the recognition or detection device and enabling the line of the gap to be tracked by the laser beam.

17. Apparatus according to any one of Claims 9 to 16, characterized in that a lower pinch roller and an upper pinch roller (50, 51) are provided, each having a stop for one of the sheets.

18. Apparatus according to any one of Claims 9 to 17, characterized in that the deformation device has a bulbous pinch block for deforming at least one of the sheets.

## Revendications

1. Procédé de préparation des bords pour le soudage par laser de tôles (1, 2) assemblées bout-à-bout, de manière à former des platines, dans lequel l'une au moins des tôles subit une déformation plastique en amont de la zone de soudage, caractérisé en ce que la largeur de l'interstice (3) compris entre les tôles (1, 2) est réduit ou l'interstice est au moins partiellement fermé par écrasement de la matière respectivement en direction de l'autre tôle.

2. Procédé selon la revendication 1, caractérisé en ce que l'épaisseur des tôles des deux côtés de l'interstice est réduite de façon inégale.

3. Procédé selon l'une des revendications 1 ou 2, caractérisé en ce qu'une zone (14) est prévue à côté de l'interstice (3), dans laquelle on autorise un gonflement de la tôle lors de la déformation de celle-ci, afin d'éviter un écartement des tôles (1, 2) dû au fluage de la matière.

4. Procédé selon l'une des revendications 1 à 3, caractérisé en ce que la déformation est régulée en fonction de la largeur de l'interstice en amont de la zone de déformation.

5. Procédé selon l'une des revendications 1 à 4, caractérisé en ce que la déformation est réalisée au moyen d'au moins un rouleau d'écrasement (4, 5; 25, 26; 28; 34; 35; 40, 41, 42, 43; 50, 51) disposé au-dessus ou en dessous de la tôle.

6. Procédé selon la revendication 5, caractérisé en ce que les tôles (1, 2) sont déformées dans des positions décalées en hauteur l'une par rapport à l'autre, contre une butée respective (45; 46, 47) ou un épaulement du rouleau d'écrasement (50,51), formant une butée.

7. Procédé selon l'une des revendications 1 à 6, caractérisé en ce que le rayon laser (6) est guidé de manière à suivre la position de l'interstice qui varie en fonction de la déformation.

8. Procédé selon l'une des revendications 1 à 7, caractérisé en ce que la déformation s'effectue dans la partie de la tôle, qui est immédiatement adjacente à la face frontale de la tôle.

9. Dispositif de préparation des bords dans un dispositif de soudage bout-à-bout, par laser, de tôles (1, 2), de manière à former des platines, le dispositif de préparation des bords comprenant un dispositif de maintien (22) qui fixe les tôles de manière que leurs faces frontales soient en contact l'une avec l'autre, et qui déforme de façon plastique au moins une des tôles en amont de la zone de soudage,
caractérisé en ce que le dispositif de déformation (4, 5; 20, 21; 25 à 27; 28 à 31; 21, 34; 35; 40 à 43; 40, 43, 46, 47; 50, 51) réduit la largeur de l'interstice (3) compris entre les tôles (1, 2), ou ferme au moins partiellement cet interstice, en écrasant la matière en direction de l'autre tôle.

10. Dispositif selon la revendication 9, caractérisé en ce que le dispositif de déformation comporte au moins un rouleau d'écrasement (4, 5; 20; 25, 26; 28; 34; 35; 40 à 43; 50, 51), à l'aide duquel on réduit l'épaisseur de la tôle.

11. Dispositif selon la revendication 10, caractérisé en ce que le rouleau d'écrasement (28) comporte une partie (29, 30) présentant une surface extérieure conique, de manière à réduire l'épaisseur de la tôle de façon non uniforme.

12. Dispositif selon la revendication 10 ou 11, caractérisé en ce que le rouleau d'écrasement comporte un renfoncement circonférentiel (14) permettant, à cet endroit, un gonflement de la tôle.

13. Dispositif selon l'une des revendications 9 à 12, caractérisé en ce qu'un dispositif capteur destiné à relever la largeur de l'interstice en amont de la zone de déformation est prévu, ainsi qu'un dispositif de commande, le dispositif de commande pilotant le dispositif de déformation en fonction de la largeur détectée de l'interstice.

14. Dispositif selon les revendications 10 et 13, caractérisé en ce que le dispositif de commande règle la force exercée par le dispositif de déformation sur la tôle.

15. Dispositif selon les revendications 10 et 13, caractérisé en ce que le dispositif de commande règle la position de l'axe du rouleau d'écrasement par rapport à la surface de la tôle.

16. Dispositif selon l'une des revendications 9 à 15, caractérisé par un dispositif détecteur optique ou mécanique destiné à détecter la trajectoire de l'interstice après la déformation, et par un agencement suiveur réagissant aux signaux du dispositif détecteur de manière à guider le rayon laser de sorte à suivre la trajectoire de l'interstice.

17. Dispositif selon l'une des revendications 9 à 16, caractérisé en ce qu'un rouleau d'écrasement inférieur et un rouleau d'écrasement supérieur (50, 51) sont prévus, qui comportent chacun une butée pour l'une des tôles.

18. Dispositif selon l'une des revendications 9 à 17, caractérisé en ce que le dispositif de déformation comporte un élément d'écrasement sphérique pour la déformation d'au moins une des tôles.
